(19) **Europäisches Patentamt / European Patent Office / Office européen des brevets**

(11) **EP 2 023 468 A1**

(12) **EUROPEAN PATENT APPLICATION**
published in accordance with Art. 153(4) EPC

(43) Date of publication:
**11.02.2009 Bulletin 2009/07**

(51) Int Cl.:
***H02K 16/00*** (2006.01)

(21) Application number: **06768158.5**

(22) Date of filing: **12.07.2006**

(86) International application number:
**PCT/JP2006/313894**

(87) International publication number:
**WO 2007/105319 (20.09.2007 Gazette 2007/38)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **10.03.2006 JP 2006066199**

(71) Applicant: **Shirakawa, Yoshiaki
Yokohama-shi,
Kanagawa 221-0865 (JP)**

(72) Inventor: **OGOSHI, Makoto
Kitakyushu-shi, Fukuoka 806-0063 (JP)**

(74) Representative: **HOFFMANN EITLE
Patent- und Rechtsanwälte
Arabellastrasse 4
81925 München (DE)**

(54) **ELECTRIC POWER GENERATOR, METHOD FOR GENERATING ELECTRIC POWER, AND MOTOR**

(57)     An electric generator 1 according to the present invention comprises a controller 10, rotors 11, 12, stators 31, 32 and an electrically-driven motor 30. Two rows of magnets 15 and 16 aligned axially side by side are mounted on the rotor surface such that respective magnetic poles of respective magnets are inversely oriented alternately along the circumferential direction and the magnetic poles are different from each other in a pair of two axially aligned magnets. Each of the stators 31, 32 comprises a plurality of stator blocks, wherein a core of each block has two core end portions which can be placed in opposite to a pair of magnets of the rotor and a core intermediate portion and wherein each of the core end portions is equipped with coil 55, 56, 57, 58 wound around the core end portion. The stator block includes a stator block for electric generation, which is connected to a capacitor 50 via a bridge diode 36 and an electric generation pulse circuit 46 and a stator block for motor action, which is connected to a motor pulse circuit 48 via a bridge diode 40. The motor pulse circuit 48 comprises an electric short-circuit switch. According to the present invention, the incremental efficiency of the electric generator can be remarkably improved.

*Fig.1*

EP 2 023 468 A1

**Description**

TECHNICAL FIELD

The present invention relates to an electric generator, an electric generation method and a motor.

BACKGROUND ART

Current electric generation systems mostly have employed such a power generation method of mainstream in which a rotor of an electric generator is rotationally driven by using an external energy source (e.g., water power, thermal power, atomic power, wind power and the like) and thus mechanically introduced rotational energy is then converted into electric energy. A conventional electric generator typically comprises a rotor including a plurality of permanent magnets disposed therein, a stator comprising a plurality of coils disposed around the rotor, a sensor for detecting a rotational angle of the rotor and a switching circuit operable in dependence on the rotor rotational angle that has been detected by the sensor to switch wire connection modes of windings of the stator coils such that an induced electromotive force can be produced in the stator coils. It is to be noted for the conventional electric generator that a plurality of coils of the stator are in wire connection to each other and accordingly not electrically or magnetically independent from each other.

The principle of power generation in the electric generators of mainstream as stated above is based on the law of electromagnetic induction discovered by Michael Farady in 1831. The law of electromagnetic induction, as being well known, describes that when a relative position between coils having a winding number, n, and a magnet changes, interlinkage flux extending through the coils varies over time, and an electro motive force proportional to a rate of change in the interlinkage flux is generated in the coils to thereby effect an induced current flow. This electro motive force, V, may be expressed by the following equation:

$$V = -n \, d\Phi / dt \qquad (1)$$

where, the interlinkage flux extending therethrough is denoted by $\phi$, the time is denoted by t and the electro motive force generated in the coils is denoted by V.

The negative sign given to the right-hand side term of the above equation implies what is called, Lentz's law, indicating that the electro motive force is generated such that the current flows in a direction to interrupt any change in the magnetic field within the coils. Specifically, the magnetic field of the coils created by the dielectric current will produce counter torque so as to interrupt the rotation of the permanent magnets of the rotor, and if the rotor is still rotated against the counter torque, the mechanical energy introduced for that will be converted into electric energy.

Accordingly, in the conventional electric generator, even though the rotational speed of the rotor is increased in order to obtain a large amount of electric power, the counter torque, and thus the mechanical energy consumption, will proportionally increase in response to the increased rotational speed, failing to improve incremental efficiency and thus ending up with a problem indicating the difficulty in improving system efficiency. It is to be understood that the incremental efficiency means a ratio of output energy from an electric generator relative to an increment of input energy to the electric generator, whereas the system efficiency means a ratio of output energy from an electric generator relative to total input energy to the electric generator.

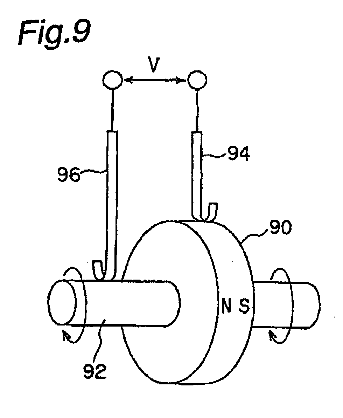

Besides, Faraday has also discovered in 1832 another induction phenomenon referred to as unipolar induction, which is different from the law of induction as discussed above (Non-patent document 1). Fig. 9 shows an electric generator which can induce this unipolar induction. As shown in Fig. 9, the electric generator for the unipolar induction comprises a disc-like magnetic circular plate 90, a shaft 92, a brush 94 to be placed in contact with an outer circumferential side surface of the magnetic circular plate 90 and a brush 96 to be placed in contact with the shaft 92. As illustrated, the magnetic circular plate 90 is oriented with its N and S poles axially aligned. When the magnetic circular plate 90 is rotated around the shaft 92, an induced electro motive force V is generated between a central region and a peripheral region of the magnetic circular plate 90, which electro motive force can be drawn out via the brushes 94 and 96. The induced electro motive force V may be expressed by the following equation:

$$V = \Phi \omega / 2\pi \qquad (2)$$

where, an angular velocity of rotation of the magnetic circular plate 90 is denoted by w and the flux extending through a section vertical to the axis of the magnetic circular plate 90 is denoted by $\Phi$.

This electric generator by the unipolar induction is known for its inherent property that it is free from any counter torque otherwise applied thereto and could exhibit a significant increase in the incremental efficiency. However, the electric generator by the unipolar induction typically produce an extremely low (0.6-0.7V) voltage and must be necessarily driven at a high rotational speed in order to obtain a high voltage. Unfortunately, there is a problem arisen that the brush 94, 96 could be mechanically damaged at its contact point due to friction during the high speed revolutions. This has inhibited the principle of electric generation by the unipolar induction from being placed in the mainstream but instead the electric generation method in accordance with the Faraday's law of electromagnetic induction in the equation (1) has been employed and thus practiced up to the present time.

It is to be noted that in the electric generator by the unipolar induction or any such electric generators that can reduce the counter torque, the incremental efficiency greater than 1 does not necessarily mean the system efficiency exceeding 1. In other words, there may be a case that the incremental efficiency will exceed 1 even with the system efficiency smaller than 1.

[Non-patent document 1]
"Iwanami Rikagaku-Jiten, 5th edition" (Iwanami shoten, Publisher), Section of "Unipolar induction"

DISCLOSURE OF THE INVENTION

PROBLEM TO BE SOLVED BY THE INVENTION

The present invention has been made in the light of the facts as stated above and an object thereof is to provide an electric generator having a rotor and a stator and an electric generation method by using the same electric generator, which is directed to enhance the incremental efficiency remarkably by suppressing any affection from the counter torque. Another object of the present invention is to provide a highly efficient motor by taking advantage of such an electric generator as stated above.

MEANS FOR SOLVING THE PROBLEMS

To solve the problems as stated above, an electric generator according to one aspect of the present invention comprises: at least one rotor equipped with an array of magnets disposed on a surface thereof, the array of magnets defined by at least two magnets disposed axially times a plurality of magnets disposed circumferentially, with both magnetic poles of each magnet aligned in a radial direction of the rotor; at least one stator disposed relative to said at least one rotor, the stator comprising a plurality of stator blocks, each of the stator blocks having a core, and each core having at least two core end portions extending in a radial direction so that each core end portion can be placed in opposite to each of said at least two magnets disposed axially and a core intermediate portion for interconnecting the core end portions, wherein said at least two core end portions are equipped with stator coils which are serially wound around and across said at least two core end portions and wherein the plurality of stator blocks includes a stator block for motor action and a stator block for electric generation; a load connection means for connecting the stator coils of the stator block for electric generation to an electric load; and an electric short-circuit means for electrically short-circuiting the stator coils of the stator block for motor action.

In this connection, the terms "aligned (disposed) axially" and "aligned in the radial direction" mean not only aligned exactly along the axial direction (or in the radial direction) but also positioned within a predetermined angular range. For example, the two magnets aligned side by side in the axial direction as mentioned above may be oriented such that a straight line connecting the first magnet and the second magnet is oblique relative to the rotor axial line within a predetermined angular range. Further, the terms "electrically short-circuiting" mean not only short-circuiting via substantially zero resistance but also encompass connecting via a lower load than at least said electric load.

According to the present invention, since a plurality of stator blocks are divided into two types: the stator block for electric generation and the stator block for motor action, and additionally the stator coils of the stator block for motor action are configured to allow the electrical short-circuiting, therefore it becomes possible to produce a repulsive magnetic field to facilitate a motor action between the magnet of the rotor and the stator coil, while allowing the induction current to be generated within the stator coil. Since the rotor is rotated with respect to the stator coils as if it were sliding over the repulsive magnetic field, the counter torque may be significantly reduced. During the revolution of the rotor being assisted by the motor action by the stator block for motor action, the induction current will be generated in the stator coils of the stator block for electric generation and practice required task through the electric load. Accordingly, the electric generator of the present invention can improve the incremental efficiency remarkably over the electric generator according to the prior art. The current flowing through the stator coil of the stator block for electric generation and also through the stator coil of the stator block for motor action will not exhibit a single sinusoidal wave such as that of the ordinary induction current but instead exhibits two overlapped sinusoidal waves having their phases offset from each other by approximately 90 degrees, indicating the motor action and the presence of the repulsive magnetic field. Further, such a practice associated with the electric generator of the prior art in which a rotor position is detected by a sensor and the stator coils are switched accordingly in dependence on the detected rotor position is no more necessary with the present invention, and thus a highly efficient electric generator having a very simple configuration can be achieved.

In order to provide the above effect, preferably, the at least two magnets disposed axially are oriented such that their magnetic poles are alternately opposite and magnetic material is interposed between respective bottom portions of said at least two magnets disposed axially and a body of the rotor such that the magnetic material extends across the two magnets. In this case, preferably, said at least two magnets disposed axially are spaced apart from each other. This arrangement allows magnetic line of force to extend from the magnet in the first (or second) row through the magnetic material to the magnet in the second (or first) row that has magnetically opposite polarity. Specifically, there will be generated the magnetic line of force that extends axially along the magnetic material. It is to be noted that the magnetic material may employ iron or the like. In addition, preferably, the magnets of the plurality of magnet pairs disposed circumferentially are arranged such that magnetic poles are opposite from pair to pair. This arrangement allows such an induction current that flows alternately in opposite directions to be generated, when the rotor is rotated. In addition, preferably, the stator coils are mounted in such a manner that they are serially wound around and across at least two core end portions with their winding direction consistent with the flowing direction of a coil current.

Preferably, a rectification means for rectifying the induction current generated in each of the stator coils of the stator block for electric generation is provided between the stator coils and the electric load. This can help improve a power factor of the electric generator. Preferably, a pulse circuit for executing intermittently an electric connection to the electric load is provided between the rectification means and the electric load. This allows the induction current generated in the stator coils of the stator block for electric generation to be supplied to the electric load efficiently.

As for the stator block for motor action, similarly a rectification means for rectifying the current generated in each of the stator coils of the stator block for motor action is provided between the stator coils and the electric short-circuit means.

Preferably, the electric short-circuit means has a pulse circuit operable to execute intermittently an electric short-circuiting. In this case, the electric generator may further comprise a controller, the controller preferably bringing a control in such a manner, in which upon driving for electric generation, the rotor is activated to start its rotations without electric short-circuiting of the stator block for motor action, then as the rotational speed of the rotor increases, the pulse circuit is activated to execute intermittently the electric short-circuiting of the stator block for motor action and once the rotational speed of the rotor has reached a predetermined value, the short-circuit for the stator block for motor action is maintained.

Further, the controller may bring a control in such a manner, in which upon starting the driving for electric generation, the rotor is activated to start its rotations under a condition where an electric connection of the stator block for electric generation to the electric load is kept to be off and as the rotational speed of the rotor increases, the electric connection to the electric load is executed intermittently.

In one preferred example, the electric load may be a capacitor, more preferably an electric double layer capacitor, and the magnet may be a neodymium magnet. In addition, the rectification means may be preferably a full-wave rectification means, specifically a bridge diode.

Preferably, the core of the stator block may be made of material of lesser remanent magnetism, for example, silicon steel plates which are laminated in layers.

A plurality of stator blocks in a preferred aspect is individually configured to be electrically and/or magnetically independent. In order to configure the plurality of stator blocks to be electrically independent, for example, respective stator blocks are connected with individually separate load connection means, electric load, electrically short-circuit means, rectification means and the like. Further, in order to configure the plurality of stator blocks to be magnetically independent, said magnetic material is separated in a circumferential direction into a plurality of pieces each corresponding to each pair of magnets of the plurality of magnet pairs, and each of the plurality of stator blocks is fixed to a frame of non-magnetic or diamagnetic material, respectively.

In order to increase the electric power to be generated, in one preferred aspect, two or more of the rotors and the stators are provided, respectively, wherein said at least two magnets disposed axially extending across the two or more magnets are oriented such that their magnetic poles are alternately opposite. Arranging two or more rotors and stators disposed coaxially, for example, may help increase the electric power to be generated in proportion to the number of rotors and stators arranged. In addition, in order to further improve the electric generation efficiency, preferably, the stator block for electric generation and the stator block for motor action have their rotor positions, where they are placed in opposite to the magnets of the rotor respectively, offset from each other by a predetermined phase.

An electric generator of the present invention may further comprise an electrically-driven motor for driving the rotor to rotate and a connection means for connecting the electrically-driven motor to the capacitor serving as the electric load.

An electric generator according to another aspect of the present invention comprises: at least one rotor equipped with an array of magnets disposed on a surface thereof, the array of magnets defined by at least two magnets disposed axially times a plurality of magnets disposed circumferentially, with both magnetic poles of each magnet aligned in a radial direction of the rotor; at least one stator disposed relative to said at least one rotor, the stator comprising a plurality of stator blocks, each of the stator blocks having a core, and each core having at least two core end portions extending in a radial direction so that each core end portion can be placed in opposite to each of said at least two magnets disposed axially and a core intermediate portion for interconnecting the core end portions, wherein said at least two core end portions are equipped with stator coils which are serially wound around and across said at least two core end portions; and a load connection means for connecting the stator coils of the stator block to an electric load.

Further provided is an electric generation method using an electric generator of the present invention, the electric generator comprising: at least one rotor equipped with an array of magnets disposed on a surface thereof, the array of magnets defined by at least two magnets disposed axially times a plurality of magnets disposed circumferentially, with both magnetic poles of each magnet aligned in a radial direction of the rotor; and at least one stator disposed relative to said at least one rotor, the stator comprising a plurality of stator blocks, each of the stator blocks having a core, and each core having at least two core end portions extending in a radial direction so that each core end portion can be placed in opposite to each of said at least two magnets disposed axially and a core intermediate portion for interconnecting the core end portions, wherein said at least two core end portions are equipped with stator coils which are serially wound around and across said at least two end portions and wherein the plurality of stator blocks includes a stator block for motor action and a stator block for electric generation, said electric generation method characterized in comprising the steps of: driving the rotor to rotate; connecting the stator coils of the stator block for electric generation to an electric load; and electrically short-circuiting the stator coils of the stator block for motor action.

The electric generator used with the electric generation method of the present invention may be configured similarly to the electric generator in the aspects as described above.

The electric generation method in a preferred aspect further comprises the step of rectifying an induction current generated in each of the stator coils of the stator block for electric generation, wherein in the step of connecting the stator coils to the electric load, the induction current after having been rectified is applied to the electric load. Preferably, the step of connecting the stator coils of the stator block for electric generation to the electric load executes the electric connection to the electric load intermittently.

An electric generation method of the present invention may further comprise the step of rectifying a current generated in each of the stator coils of the stator block for motor action. Preferably, the step of electrically short-circuiting the stator coils of the stator block for motor action executes intermittently an electric short-circuiting.

In an electric generation method in a preferred aspect, once the rotational speed of the rotor has reached a predetermined value, the intermittent short-circuiting of the stator block for motor action is suspended and instead the short-circuit condition is maintained.

Preferably, the electric load is a capacitor and the electric generator further comprises an electrically-driven motor for driving the rotor to rotate, wherein the method further comprises the step of supplying electricity that has been charged into the capacitor to the electrically-driven motor.

An electric generator according to the present invention may also serves as a motor for providing a rotational torque to the outside via the revolutions of the rotor.

A motor according to one aspect of the present invention comprises: at least one rotor equipped with an array of magnets disposed on a surface thereof, the array of magnets defined by at least two magnets disposed axially times a plurality of magnets disposed circumferentially, with both magnetic poles of each magnet aligned in a radial direction of the rotor; at least one stator disposed relative to said at least one rotor, the stator comprising a plurality of stator blocks, each of the stator blocks having a core, and each core having at least two core end portions extending in a radial direction so that each core end portion can be placed in opposite to each of said at least two magnets disposed axially and a core intermediate portion for interconnecting the core end portions, wherein said at least two core end portions are equipped with stator coils which are serially wound around and across said at least two end portions; and an electric short circuit means for electrically short-circuiting the stator coils of the stator block.

A motor according to another aspect of the present invention comprises: at least one rotor equipped with an array of magnets disposed on a surface thereof, the array of magnets defined by at least two magnets disposed axially times a plurality of magnets disposed circumferentially, with both magnetic poles of each magnet aligned in a radial direction of the rotor; at least one stator disposed relative to said at least one rotor, the stator comprising a plurality of stator blocks, each of the stator blocks having a core, and each core having at least two core end portions extending in a radial direction so that each core end portion can be placed in opposite to each of said at least two magnets disposed axially and a core intermediate portion for interconnecting the core end portions, wherein said at least two core end portions are equipped with stator coils which are serially wound around and across said at least two core end portions and wherein the plurality of stator blocks includes a stator block for motor action and a stator block for electric generation; an electric short circuit means for electrically short-circuiting the stator coils of the stator block for motor action; a load connection means for connecting the stator coils of the stator block for electric generation to an electric load; and a preliminary electrically-driven motor configured to drive the rotor to rotate. Preferably, the electric load is a capacitor, wherein the motor further comprises a connection means for connecting the preliminary electrically-driven motor to the capacitor.

Further, a motor according to a preferred aspect comprises components as defined in any one of the aspects of the electric generator of the present invention as stated above, wherein the motor is configured such that the rotational torque of the rotor may be output to outside thereof.

This and other aspects of the present invention will be further apparent by referring to the following detailed description in conjunction with the attached drawings.

BRIEF DESCRIPTION OF THE DRAWINGS

Fig. 1 is a schematic diagram showing an exemplary system configuration of an electric generator according to an embodiment of the present invention;

Fig. 2 is a sectional view of a rotor taken along the line I-I of Fig. 1;

Fig. 3 is a perspective view of a rotor and a stator block of an electric generator according to the present embodiment;

Fig. 4 is a perspective view illustrating a physical relationship between a first rotor and a second rotor of an electric generator according to the present embodiment;

Fig. 5 is a schematic diagram showing a way for winding coils of a stator block and a circuit configuration of a full-wave rectifier of an electric generator according to the present embodiment;

Fig. 6 is a top view of a stator block;

Fig. 7 is an external appearance of an electric generator according to the present embodiment;

Fig. 8 is a flow chart illustrating an electric generation sequence in an electric generator according to the present embodiment; and

Fig. 9 presents a schematic view illustrating a general configuration of a unipolar electric generator according to the prior art.

EXPLANATION OF THE REFERENCE NUMERALS

Components in the attached drawings are designated as follows:

1 Electric generator/Motor
10 Controller
11, 12 First and Second rotor
13, 14 First and Second rotor body
15, 16, 17, 18 Magnet row
20 Plate of magnetic material
23 Shaft
31, 32 First and Second stator
37 Core
36, 40 Bridge diode
46 Electric generation pulse circuit
48 Motor pulse circuit
50 Electric double layer capacitor
51 Core end portion
53 Core intermediate portion
55, 56 Stator coil
70 Fixing frame
72 Housing
74 Operating instrument panel

THE MOST PREFERRED EMBODIMENTS OF THE INVENTION

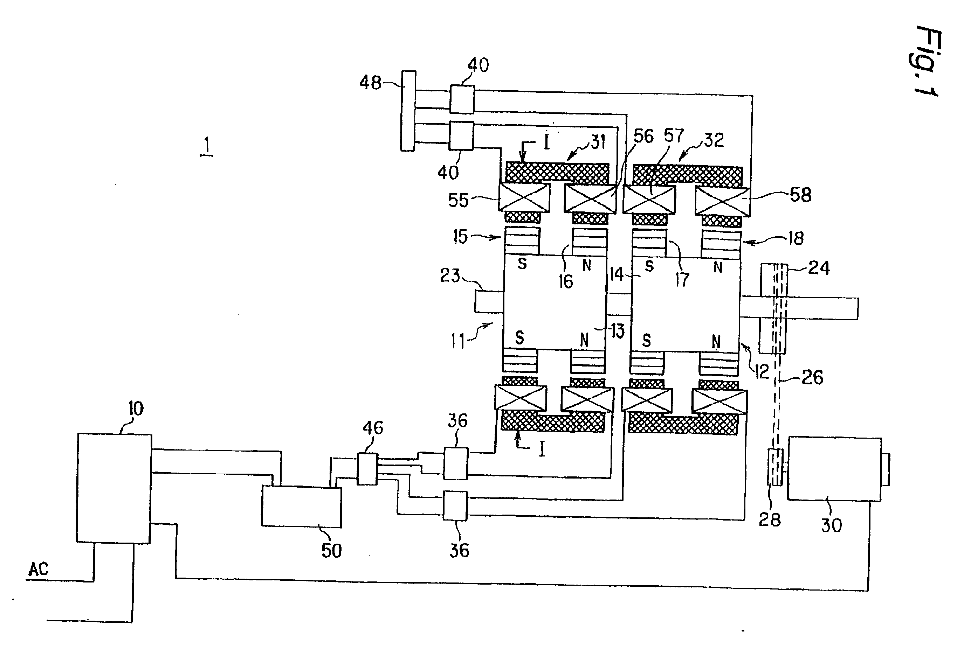

Fig. 1 shows a configuration of an electric generator 1 according to an embodiment of the present invention. As shown in Fig. 1, the electric generator 1 comprises a controller 10 for controlling an electric generation sequence, a first and a second rotor 11, 12, a first and a second stator 31, 32 disposed around the rotor 11, 12, respectively, a direct current motor 30 and a double layer capacitor 50 for accumulating electric energy output from the stator.

The first and the second rotors 11 and 12 are configured such that they can rotate together around a common shaft 23 as an axis of rotation. The shaft 23 is equipped with a pulley 24 and a belt 26 is stretched across between the pulley 24 and a pulley 28 attached on an output shaft of the direct current motor 30. Accordingly, the first and the second rotors 11 and 12 are rotated together by the rotational driving of the direct current motor 30.

The first rotor 11 is equipped with two rows, or a first 15 and a second 16 rows, of magnets aligned side by side in the axial direction, each row of magnets comprising a plurality of magnets disposed along the rotor circumferential direction. Similarly, the second rotor 12 is equipped with two rows, or a first 17 and a second 18 rows, of magnets aligned side by side in the axial direction, each row of magnets comprising a plurality of magnets disposed along the rotor circumferential direction. It is to be noted that those magnets are preferably a neodymium magnet.

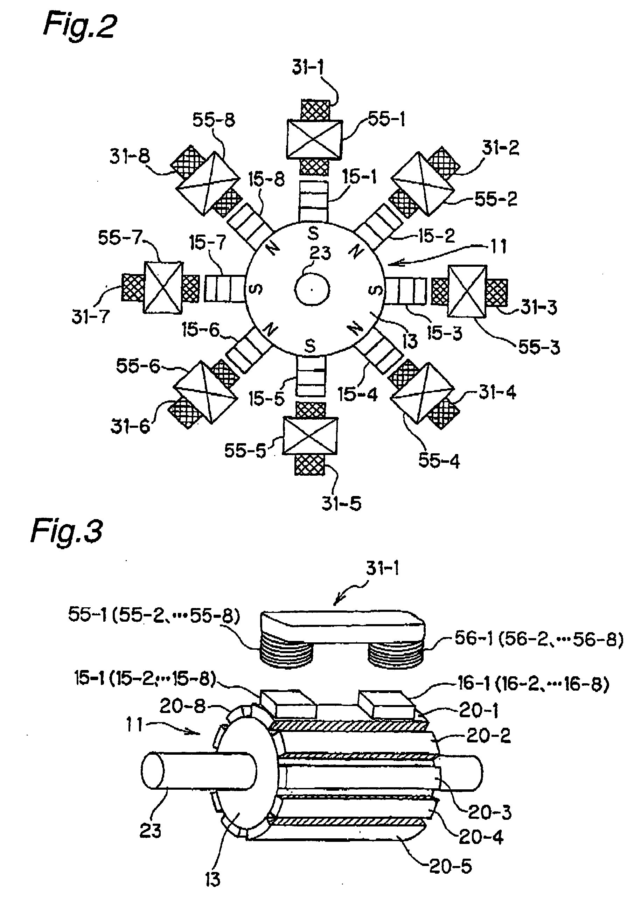

Fig. 2 shows a section of the first rotor 11 along with the first stator 31 disposed around the first rotor 11, taken along the line I-I of Fig. 1. As seen from Fig. 2, the first row of magnets 15 of the first rotor 11 comprises a plurality of magnets 15-1, 15-2, ...15-8, which are arranged along the rotor circumferential direction. The plurality of magnets 15-1, 15-2, ...15-8 are attached to a rotor body 13 such that the lines connecting N poles and S poles of respective magnets are aligned in the radial direction of the rotor and arranged so that the magnetic poles of respective magnets located in radially outer side may be alternately inverted along the circumferential direction. Specifically, the magnetic poles of the magnets 15-1, 15-2, ...15-8 located in the radially outer side are arranged in a sequence of N, S, N, S, N, S, N, S (while the magnet poles located in the radially inner side are arranged in a sequence of S, N, S, N, S, N, S, N). The second row of magnets 16 is also configured to have its section similar to that of Fig. 2, but the magnets in the second row 16 are arranged so that they have magnetic polarities opposite to those of the magnets in the first row 15, which will be described later.

Reference will be now made to Fig. 3, which represents a perspective view of the rotor 11 and the stator 31. It is to be noted that for simplicity of illustration, Fig. 3 shows only each one of the magnets from the first and the second rows of magnets as well as only one corresponding stator block. As shown in Fig. 3, one magnet 15-1 (15-2, ... 15-8) from the first row of magnets 15 is aligned axially with another magnet 16-1 (16-2, .- 16-8) from the second row of magnets 16 and they are further arranged such that the magnetic poles of a pair of axially aligned magnets are opposite from each other within the pair. In one example, since the magnetic pole located in the radially outer side of the magnet 15-1 is N, therefore the magnetic pole in the radially outer side of the magnet 16-1 aligned with the magnet 15-1 should be S. In addition, the rotor 11 is equipped with a plurality of plates 20-1, 20-2, ... 20-8 spaced part from each other circumferentially on the outer circumferential surface of the rotor, and pairs of aligned magnets (15-1, 16-1), ... (15-8, 16-8) are attached on the plates 20-1, -. 20-8, respectively. Those plates 20 may be made of material having a magnetic property, for example a magnetic material such as iron and a spacing is defined between any adjacent plates.

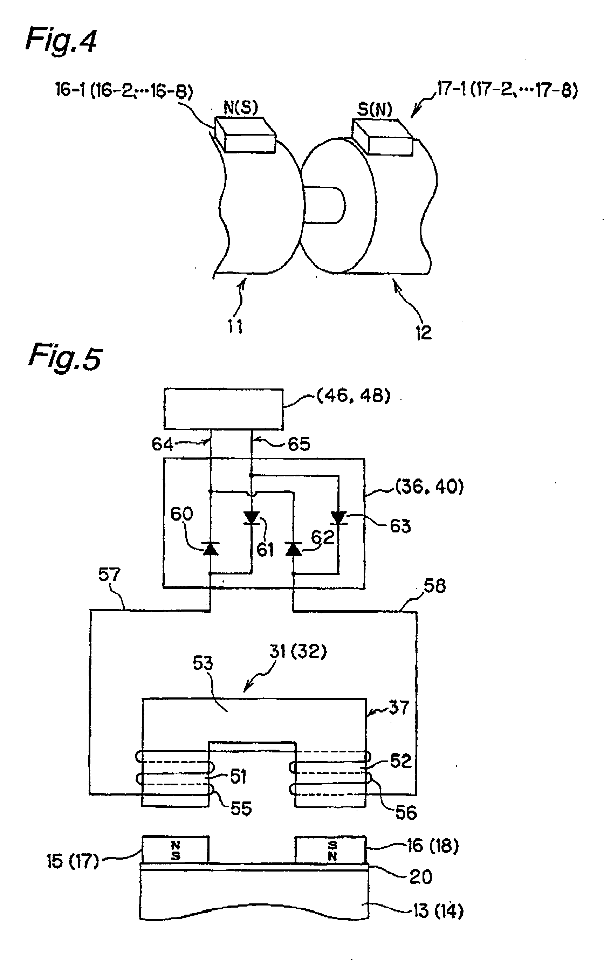

Fig. 4 shows a physical relationship between the first rotor 11 and the second rotor 12. The one magnet 16-1 (16-2, ... 16-8) from the second row of magnets 16 of the first rotor 11 is aligned with another magnet 17-1 (17-2, ... 17-8) from the first row of magnets of the second rotor 12 and they are further arranged such that the magnetic poles of a pair of aligned magnets are opposite from each other. In one example, since the magnetic pole located in the radially outer side of the magnet 16-1 is N, therefore the magnetic pole in the radially outer side of the magnet 17-1 aligned with the magnet 16-1 should be S. The rest of the configuration of the second rotor 12 except those noted above may be similar to that of the first rotor 11. It is to be noted that the alignment between the paired magnets includes not only the alignment of the magnets exactly along the axial direction but also the condition of magnets circumferentially offset by a predetermined angle.

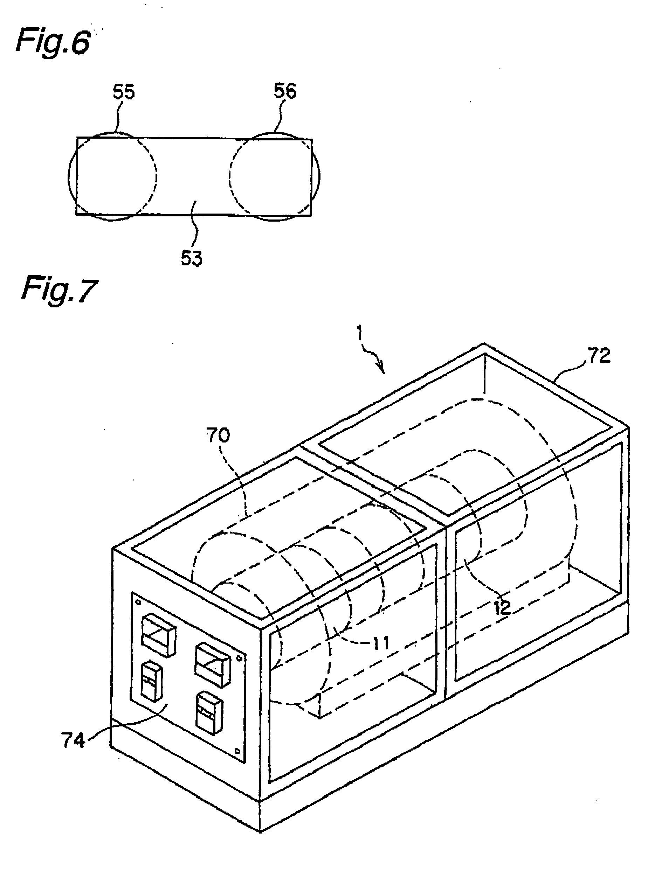

Turning back to Fig. 2, the first stator 31 is configured to include a plurality of stator blocks 31-1, 31-2, ... 31-8, which are independent from each other. Each of the stator blocks of the first stator 31 has a core 37 as shown in Fig. 5. Preferably, the core 37 is made of silicon steel plates 37 which are laminated in layers. Each core 37 has two core end portions 51 and 52, each extending radially so that it can be placed in opposite to each one of the pair of aligned magnets (15, 16) of the rotor and a core intermediate portion 53 axially interconnecting the two core end portions. The two core end portions 51 and 52 are equipped with stator coils 55 and 56, which are wound around the core end portions 51 and 52, respectively. The stator coils 55 and 56 are formed with a single winding, which is wound serially to encompass the two core end portions 51 and 52 such that the winding direction is consistent with the flowing direction of a coil current. In the illustrated example, the single winding is wound clockwise as viewed from the core end portion 51, 52, but it may be wound counterclockwise. Fig. 3 shows a perspective view of a stator block and Fig. 6 shows a top view of the stator block, respectively. Stator blocks of the second stator 32 are also configured similarly to those as described above.

The stator block is divided into stator blocks for electric generation (31-1, 31-3, 31-5, 31-7), which are operable to supply electric energy and stator blocks for motor action (31-2, 31-4, 31-6, 31-8), which is operable to apply a motor action to the rotor. As shown in Fig. 1, each one of the stator blocks for electric generation (31-1, 31-3, 31-5, 31-7) is connected to the capacitor 50 via a full-wave rectification circuit 36 and an electric generation pulse circuit 46. Each one of the stator blocks for motor action (31-2, 31-4, 31-6, 31-8) is connected to a motor pulse circuit 48 via a full-wave rectification circuit 40.

As shown in more detail in Fig. 5, the full-wave rectification circuits 36 and 40 comprises four diodes 60, 61, 62 and 63 connected to leads 57 and 58 from the stator coils 55 and 56, respectively. This circuit configuration is known as, what is called, a bridge circuit and operable to full-wave rectify the induction current induced in the stator coils 55 and 56. The leads 64 and 65 from the full-wave rectification circuits 36 and 40 are connected to pulse circuits 46 and 48, respectively.

The electric generation pulse circuit 46, in one example, comprises a switch (not shown) disposed in a current path from the lead 64 or 65 of the full-wave rectification circuit 36 (Fig. 5) to a terminal of the capacitor 50 and a pulse oscillation circuit for providing pulsed switching between on state (electric power supplied to the capacitor) and off state (no electric power supplied to the capacitor) of the switch. This switch may be constructed with a transistor and the like. The width and frequency of the pulse may be adjustable, as will be described later.

The motor pulse circuit 48 comprises a switch (not shown) for electrically short-circuiting between the leads 64 and 65 of the full-wave rectification circuit 40 and a pulse oscillation circuit for providing pulsed switching between on state (electrically short-circuited) and off state (released) of the electrically short-circuiting switch. This switch may be constructed with a transistor and the like. The width and frequency of the pulse may be adjustable, as will be described later.

Fig. 7 shows an external appearance of the electric generator as shown in Fig. 1. Although the stators 31 and 32 are omitted in Fig. 7, a fixing frame 70 to which the stator blocks may be attached is shown along with a housing 72. This fixing frame 70 is made of non-magnetic or diamagnetic material, such as aluminum, which is useful to make respective stator blocks magnetically independent. It is to be noted that the housing 72 is also preferably made of non-magnetic or diamagnetic material, such as aluminum. The housing 72 is equipped with an operating instrument panel 74 to enable controlling of the electric generator 1 and monitoring of the current, voltage and the like of the direct current motor 30.

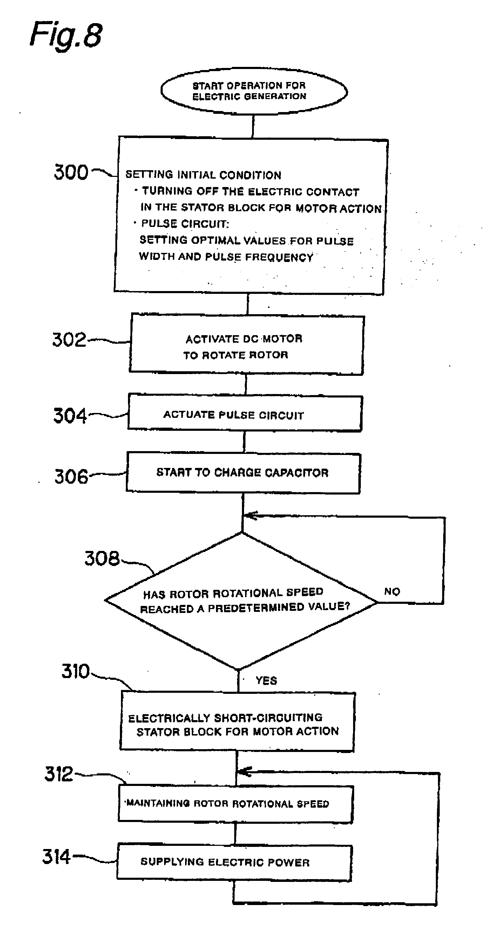

An electric generation sequence in the electric generator 1 according to an embodiment of the present invention will be described with reference to a flow chart of Fig. 8.

As illustrated in Fig. 8, firstly, an initial condition is set (Step 300). In this step of initial setting, the electrically short-circuiting switch of the motor pulse circuit 48 is turned off and the switch of the electric generation pulse circuit 46 is turned off so as not to apply any electric load at the beginning of the electric generation. It is to be noted that the pulse width and the pulse frequency of the pulse circuit 46, 48 may be set to respective optimal values. The pulse width and the pulse frequency can be adjusted by using a regulator on the operating instrument panel 74 to respective optimal values which may be determined experimentally in advance.

The direct current motor 30 is then activated to drive the rotor 11, 12 to rotate. At that time, if the capacitor 50 has been charged sufficiently, the controller 10 uses the electric power supplied from the capacitor 50 to drive the direct current motor 30 to rotate. If the capacitor 50 has not been charged sufficiently, the controller 10 then converts the electric power from an external AC power supply to a direct current for supply to the direct current motor 30.

As the rotational speed of the rotor increases, the actuation of the motor pulse circuit 48 is commenced. Starting of the actuation of the motor pulse circuit 48 may be carried out when, for example, the rotational speed of the rotor exceeds a certain speed (lower than a predetermined value as will be described later). In this stage, an electro motive force is produced from the mutual induction operation in the stator coils 55 and 56 of the stator block for motor action. It has been confirmed that as the rotational speed increases to a sufficient level, a first waveform representative of a normal induced electric motive force and a second waveform with a phase delayed from the first waveform appear in the unrectified current of the stator coils of the stator block for motor action. This implies that such a motor operation is developed that is directed to drive the rotor to rotate positively rather than applying a counter torque to the rotor.

Then, the electric generation pulse circuit 46 is actuated to start the charging of the capacitor 50 (Step 306). Since the electric power supply is carried out in a pulsed manner to the capacitor 50, the capacitor 50 can be charged smoothly. It is to be noted that the starting of actuation of the electric generation pulse circuit 46 may take place at a timing delayed from that for the starting of actuation of the motor pulse circuit 48.

Subsequently, the controller 10 determines if the rotor rotational speed has reached the predetermined value (Step 308). If the rotor rotational speed has not yet reached the predetermined value (determined negative in Step 308), then the process will stay in a standby mode until the rotor rotational speed reaches the predetermined value. During this mode, the rotor rotational speed will be increasing. It is to be noted that the predetermined value represents the one that has been experimentally determined so as to obtain a maximum electric generation efficiency. For example, 800-1000 rotations/min has been obtained experimentally as the predetermined value. Although the rotational speed of the rotor may be detected directly by a sensor or the like, it may be estimated from an electric power consumption of the direct current motor 30.

If the rotor rotational speed has reached the predetermined value (determined affirmative in Step 308), then the stator coils of the stator block for motor action are short-circuited (Step 310) to thereby allow the rotor rotational speed to be maintained and controlled at the predetermined value (Step 312). It has been experimentally confirmed that as placed in this condition, the rotor rotational load in the electric generator 1 should be decreased significantly, and so the generator is operable with the current of 1-2A at 100V. Since the electric generator 1 works to produce the electric power at the improved efficiency, the capacitor 50 can be charged quickly. The controller 10 uses the electric power from the capacitor 50 to drive the direct current motor 30, while working for external electric power supply (Step 314). Further, as placed in this condition, the electric generator 1 can also serve as a motor to supply a rotational torque externally via the shaft 23.

The embodiment of the present invention has been described above, but the present invention is not limited to that.

For example, although the embodiment has employed a dual rotor configuration comprising the first and the second rotors, only a single rotor may be used. Alternatively, the configuration using three or more rotors may be employed to obtain much greater electric power. Further, it will be apparent that the configuration including each two rows of magnets arranged in each one of the two rotors 13 and 14 essentially gives no difference from that including four rows of magnets arranged in a single body.

Further, although it is preferred that the rotor is disposed in the inner side and the stator is disposed in the outer side as shown in the aspect of the illustrated embodiment, another aspect of embodiment may be contemplated as well in which inversely the stator is disposed in the inner side and the rotor is disposed in the outer side.

In addition, the number of magnets provided in a single row of magnets and their associated stator blocks may be modified arbitrarily as desired.

INDUSTRIAL APPLICABILITY

According to the present invention, in spite of a great load applied in starting to drive the rotor to rotate, when the electric generation is carried out at the optimal rotor rotational speed, the rotations of rotor can be maintained with an extremely low current consumption, while allowing continuous charging of the capacitor over a long time period. That is, the above fact implies an outstanding improvement achieved in the incremental efficiency, which has been evidenced apparently by experimental data. Thus, according to the present invention, it becomes possible to provide an electric generator and a motor which are very usable in terms of industrial applicability.

**Claims**

1. An electric generator comprising:

   at least one rotor equipped with a plurality of magnet pairs disposed circumferentially on a surface thereof, each magnet pair including at least two magnets disposed axially with both magnetic poles of each magnet aligned in a radial direction of said rotor;
   at least one stator disposed relative to said at least one rotor, said stator comprising a plurality of stator blocks, each of said stator blocks having a core, and each core having at least two core end portions extending in a radial direction so that each core end portion can be placed in opposite to each of said at least two magnets disposed axially and a core intermediate portion for interconnecting said core end portions, wherein said at least two core end portions are equipped with stator coils which are serially wound around and across said at least two core end portions and wherein said plurality of stator blocks includes a stator block for motor action and a stator block for electric generation;
   a load connection means for connecting said stator coils of said stator block for electric generation to an electric load; and
   an electric short-circuit means for electrically short-circuiting said stator coils of said stator block for motor action.

2. An electric generator in accordance with claim 1, in which said at least two magnets disposed axially are oriented such that magnetic poles are alternately opposite.

3. An electric generator in accordance with claim 2, in which a magnetic material is interposed between respective bottom portions of said at least two magnets disposed axially and a body of said rotor such that said magnetic material extends across said two magnets.

4. An electric generator in accordance with claim 1, in which magnets of said plurality of magnet pairs disposed circumferentially are arranged such that magnetic poles are opposite from pair to pair.

5. An electric generator in accordance with any one of claim 1 to 4, in which a rectification means for rectifying an induction current generated in each of said stator coils of said stator block for electric generation is provided between said stator coils and said electric load.

6. An electric generator in accordance with claim 5, in which a pulse circuit for executing intermittently an electric connection to said electric load is provided between said rectification means and said electric load.

7. An electric generator in accordance with any one of claim 1 to 6, in which a rectification means for rectifying a current generated in each of said stator coils of said stator block for motor action is provided between said stator coils and said electric short-circuit means.

8. An electric generator in accordance with any one of claim 1 to 7, in which said electric short-circuit means has a pulse circuit operable to execute intermittently an electric short-circuiting.

9. An electric generator in accordance with claim 8, further comprising a controller, wherein said controller brings a control in such a manner, in which upon driving for electric generation, said rotor is activated to start its rotations without electric short-circuiting of said stator block for motor action, then as the rotational speed of said rotor increases, said pulse circuit is activated to execute intermittently the electric short-circuiting of said stator block for motor action and once the rotational speed of said rotor has reached a predetermined value, the short-circuit for said stator block for motor action is maintained.

10. An electric generator in accordance with claim 9, in which said controller brings a control in such a manner, in which upon starting the driving for electric generation, said rotor is activated to start its rotations under a condition where an electric connection of said stator block for electric generation to said electric load is kept to be off and as the rotational speed of said rotor increases, said electric connection to said electric load is executed intermittently.

11. An electric generator in accordance with any one of claim 1 to 10, in which said at least two core end portions are equipped with stator coils which are serially wound around and across said at least two core end portions such that the winding direction is consistent with a flowing direction of a coil current.

12. An electric generator in accordance with any one of claim 1 to 11, in which said electric load is a capacitor.

13. An electric generator in accordance with any one of claim 1 to 12, in which said magnet is a neodymium magnet.

14. An electric generator in accordance with any one of claim 5 to 7, in which said rectification means is a full-wave rectification means.

15. An electric generator in accordance with claim 14, in which said full-wave rectification means is a bridge diode.

16. An electric generator in accordance with any one of claim 1 to 15, in which said core of said stator block is made of silicon steel plates which are laminated in layers.

17. An electric generator in accordance with any one of claim 1 to 16, in which
two or more of said rotors and said stators are provided, respectively, wherein
said at least two magnets disposed axially extending across said two or more magnets are oriented such that their magnetic poles are alternately opposite.

18. An electric generator in accordance with claim 3, in which said at least two magnets disposed axially are spaced apart from each other.

19. An electric generator in accordance with claim 3, in which said magnetic material is separated in a circumferential direction into a plurality of pieces each corresponding to each pair of magnets of said plurality of magnet pairs

20. An electric generator in accordance with any one of claim 1 to 19, in which each of said plurality of stator blocks is fixed to a frame of non-magnetic or diamagnetic material, respectively.

21. An electric generator in accordance with any one of claim 1 to 20, in which each of said plurality of stator blocks is configured to be electrically and/or magnetically independent from others, respectively.

22. An electric generator in accordance with any one of claim 1 to 21, in which said stator block for electric generation and said stator block for motor action have their rotor positions, where they are placed in opposite to said magnets of said rotor respectively, offset from each other by a predetermined phase.

23. An electric generator in accordance with claim 12, further comprising an electrically-driven motor for driving said rotor to rotate and a connection means for connecting said electrically-driven motor to said capacitor.

24. An electric generation method using an electric generator,

said electric generator comprising:

at least one rotor, said rotor equipped with an array of magnets disposed on a surface thereof, said array of magnets defined by at least two magnets disposed axially times a plurality of magnets disposed circumferentially, with both magnetic poles of each magnet aligned in a radial direction of said rotor; and
at least one stator disposed relative to said at least one rotor, said stator comprising a plurality of stator blocks, each of said stator blocks having a core, and each core having at least two core end portions extending in a radial direction so that each core end portion can be placed in opposite to each of said at least two magnets disposed axially and a core intermediate portion for interconnecting said core end portions, wherein said at least two core end portions are equipped with stator coils which are wound around and across said at least two end portions and wherein said plurality of stator blocks includes a stator block for motor action and a stator block for electric generation, said method **characterized in** comprising the steps of:

driving said rotor to rotate;

connecting said stator coils of said stator block for electric generation to an electric load; and electrically short-circuiting said stator coils of said stator block for motor action.

25. An electric generation method in accordance with claim 24, in which said at least two magnets disposed axially are oriented such that magnetic poles are alternately opposite.

26. An electric generation method in accordance with claim 25, in which a magnetic material is interposed between respective bottom portions of said at least two magnets disposed axially and a body of said rotor such that said magnetic material extends across said two magnets.

27. An electric generation method in accordance with claim 24, in which magnets of said plurality of magnet pairs disposed circumferentially are arranged such that magnetic poles are opposite from pair to pair.

28. An electric generation method in accordance with any one of claim 24 to 27, further comprising the step of rectifying an induction current generated in each of said stator coils of said stator block for electric generation, wherein in said step of connecting said stator coils to an electric load, the induction current after having been rectified is applied to said electric load.

**29.** An electric generation method in accordance with claim 28, in which said step of connecting said stator coils of said stator block for electric generation to the electric load executes the electric connection to the electric load intermittently.

**30.** An electric generation method in accordance with any one of claim 24 to 29, further comprising the step of rectifying a current generated in each of said stator coils of said stator blocks for motor action.

**31.** An electric generation method in accordance with any one of claim 24 to 30, said step of electrically short-circuiting said stator coils of said stator block for motor action executes intermittently an electric short-circuiting.

**32.** An electric generation method in accordance with claim 31, wherein once the rotational speed of said rotor has reached a predetermined value, said intermittent short-circuiting of said stator block for motor action is suspended and instead the short-circuit condition is maintained.

**33.** An electric generation method in accordance with any one of claim 24 to 32, in which
said electric load is a capacitor and said electric generator further comprises an electrically-driven motor for driving said rotor to rotate,
wherein said method further comprises the step of supplying electricity that has been charged into said capacitor to said electrically-driven motor.

**34.** A motor comprising:

at least one rotor equipped with an array of magnets disposed on a surface thereof, said array of magnets defined by at least two magnets disposed axially times a plurality of magnets disposed circumferentially, with both magnetic poles of each magnet aligned in a radial direction of said rotor; and
at least one stator disposed relative to said at least one rotor, said stator comprising a plurality of stator blocks, each of said stator blocks having a core, and each core having at least two core end portions extending in a radial direction so that each core end portion can be placed in opposite to each of said at least two magnets disposed axially and a core intermediate portion for interconnecting said core end portions, wherein said at least two core end portions are equipped with stator coils which are serially wound around and across said at least two core end portions; and
an electric short circuit means for electrically short-circuiting said stator coils of said stator block.

**35.** A motor comprising:

at least one rotor equipped with an array of magnets disposed on a surface thereof, said array of magnets defined by at least two magnets disposed axially times a plurality of magnets disposed circumferentially, with both magnetic poles of each magnet aligned in a radial direction of said rotor; and
at least one stator disposed relative to said at least one rotor, said stator comprising a plurality of stator blocks, each of said stator blocks having a core, and each core having at least two core end portions extending in a radial direction so that each core end portion can be placed in opposite to each of said at least two magnets disposed axially and a core intermediate portion for interconnecting said core end portions, wherein said at least two core end portions are equipped with stator coils which are serially wound around and across said at least two core end portions and wherein said plurality of stator blocks includes a stator block for motor action and a stator block for electric generation;
an electric short circuit means for electrically short-circuiting said stator coils of said stator block for motor action;
a load connection means for connecting said stator coils of said stator block for electric generation to an electric load; and
a preliminary electrically-driven motor configured to drive said rotor to rotate.

**36.** A motor in accordance with claim 35, in which said electric load is a capacitor,
wherein said motor further comprises a connection means for connecting said preliminary electrically-driven motor to said capacitor.

**37.** A motor comprising components of the electric generator as defined in any one of claim 1 to 23,
wherein rotational torque of said rotor may be output to outside thereof.

**38.** An electric generator, comprising:

at least one rotor equipped with an array of magnets disposed on a surface thereof, said array of magnets defined by at least two magnets disposed axially times a plurality of magnets disposed circumferentially, with both magnetic poles of each magnet aligned in a radial direction of said rotor;
at least one stator disposed relative to said at least one rotor, said stator comprising a plurality of stator blocks, each of said stator blocks having a core, and each core having at least two core end portions extending in a radial direction so that each core end portion can be placed in opposite to each of said at least two magnets disposed axially and a core intermediate portion for interconnecting said core end portions, wherein said at least two core end portions are equipped with stator coils which are serially wound around and across said at least two end portions; and
a load connection means for connecting said stator coils of said stator block to an electric load.

39. An electric generator in accordance with claim 12, in which said capacitor is an electric double layer capacitor.

Fig.1

*Fig.2*

*Fig.3*

*Fig.4*

16-1 (16-2,···16-8)    N(S)    S(N)    17-1 (17-2,···17-8)

11    12

*Fig.5*

(46, 48)

64    65

(36, 40)

60    63

61    62

57    58

31 (32)

53    37

52

51

55    56

15 (17)    N S    S N    16 (18)

20

13 (14)

EP 2 023 468 A1

*Fig.6*

55    56

53

*Fig.7*

1

72

70

12

11

74

# Fig.8

START OPERATION FOR
ELECTRIC GENERATION

300 — SETTING INITIAL CONDITION
· TURNING OFF THE ELECTRIC CONTACT
IN THE STATOR BLOCK FOR MOTOR ACTION
· PULSE CIRCUIT:
SETTING OPTIMAL VALUES FOR PULSE
WIDTH AND PULSE FREQUENCY

302 — ACTIVATE DC MOTOR
TO ROTATE ROTOR

304 — ACTUATE PULSE CIRCUIT

306 — START TO CHARGE CAPACITOR

308 — HAS ROTOR ROTATIONAL SPEED
REACHED A PREDETERMINED VALUE?          NO

YES

310 — ELECTRICALLY SHORT-CIRCUITING
STATOR BLOCK FOR MOTOR ACTION

312 — MAINTAINING ROTOR ROTATIONAL SPEED

314 — SUPPLYING ELECTRIC POWER

## Fig.9

**INTERNATIONAL SEARCH REPORT**

| International application No. |
|---|
| PCT/JP2006/313894 |

A. CLASSIFICATION OF SUBJECT MATTER
*H02K16/00*(2006.01)i

According to International Patent Classification (IPC) or to both national classification and IPC

B. FIELDS SEARCHED

Minimum documentation searched (classification system followed by classification symbols)
H02K16/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 11-150925 A (Kenji NAKAJIMA), 02 June, 1999 (02.06.99), (Family: none) | 1-39 |
| X | JP 2-155455 A (Saichi OSAWA), 14 June, 1990 (14.06.90), (Family: none) | 1-39 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 October, 2006 (12.10.06) | 24 October, 2006 (24.10.06) |

| Name and mailing address of the ISA/ | Authorized officer |
|---|---|
| Japanese Patent Office | |
| Facsimile No. | Telephone No. |

Form PCT/ISA/210 (second sheet) (April 2005)